Europäisches Patentamt

European Patent Office

Office européen des brevets

(11) Veröffentlichungsnummer: **0 266 514 B1**

(12) **EUROPÄISCHE PATENTSCHRIFT**

(45) Veröffentlichungstag der Patentschrift: 15.05.91

(51) Int. Cl.⁵: **B60J 5/10**, B62D 29/04

(21) Anmeldenummer: 87113070.4

(22) Anmeldetag: 08.09.87

(54) Doppelwandiges Karosseriebauteil aus Kunststoff für Kraftfahrzeuge.

(30) Priorität: 05.11.86 DE 3637622

(43) Veröffentlichungstag der Anmeldung:
11.05.88 Patentblatt 88/19

(45) Bekanntmachung des Hinweises auf die
Patenterteilung:
15.05.91 Patentblatt 91/20

(84) Benannte Vertragsstaaten:
DE ES FR GB IT SE

(56) Entgegenhaltungen:
DE-A- 1 655 650
DE-A- 2 014 805
FR-A- 2 520 319

(73) Patentinhaber: FORD-WERKE AKTIENGESELL-
SCHAFT
Werk Köln-Niehl Henry-Ford-Strasse Postfach 60 40 02
W-5000 Köln 60(DE)DE IT SE

Patentinhaber: FORD MOTOR COMPANY LI-
MITED
Eagle Way
Brentwood Essex CM13 3BW(GB)GB

Patentinhaber: FORD FRANCE SOCIETE ANO-
NYME
344 Avenue Napoléon Bonaparte B.P. 307
F-92506 Rueil Malmaison Cedex(FR)FR

Patentinhaber: Ford Motor Company
The American Road
Dearborn, MI 48121(US)ES

(72) Erfinder: Vogt, Hans
Kielsberg 36
W-5063 Overath(DE)
Erfinder: McKechnie, Richard C.
Valkestraat 9
NL-4631 RJ Hoogerheide(NL)
Erfinder: Russell, Malcolm H.
36 Brookdale Avenue
Upminster RM 142 LT(GB)
Erfinder: Gentle, Derek F.
4647 Hedgewood
Birmingham Michigan(US)

(74) Vertreter: Messulam, Alec Moses et al
A. Messulam & Co. 24 Broadway
Leigh on Sea Essex SS9 1BN(GB)

## Beschreibung

Die Erfindung bezieht sich auf ein doppelwandiges Karosseriebauteil aus Kunststoff für Kraftfahrzeuge, insbesondere auf ein Tür- oder Heckklappen-Bauteil der im Oberbegriff des Patentanspruches 1 erläuterten Art. Ein derartiges Bauteil ist aus der DE-A-1655650 bekannt.

Ein doppelwandiges Karosseriebauteil aus Kunststoff für Kraftfahrzeuge, insbesondere ein Heckklappen-Bauteil der im Oberbegriff des Patentanspruches 1 erläuterten Art ist bereits aus der Zeitschrift "Automobil-Revue" Nr. 36 vom 29.08.1985 bekanntgeworden.

Bei diesem doppelwandigen Karosseriebauteil wurde ein aus einem thermoplastischen Kunststoffmaterial gespritztes Außenteil mit einem Innenteil durch ein sogenanntes Warmeinsenkverfahren miteinander verklebt.

Ein solches Warmeinsenkverfahren ist verhältnismäßig aufwendig und teuer und dementsprechend für den Einsatz in der Großserienfertigung nicht optimal geeignet.

Aus der EP-A- 0.111.457 ist ein doppelwandiges Karosseriebauteil aus Kunststoff für Kraftfahrzeuge, insbesondere eine Heckklappe bekannt, bei der ein aus einem thermoplastischen Kunststoffmaterial gespritztes Außenteil mit einer Vielzahl von Verstärkungsrippen versehen ist und nur in einem unteren Bereich mit einem ebensolchen Innenteil durch Schrauben verbunden wird.

Dieses bekannte Karosseriebauteil weist den Nachteil auf, daß es in seinen oberen Rahmenbereichen nur einwandig ist und es dementsprechend mit metallischen Verstärkungsteilen zur Aufnahme der Scharnier- und Abstützbeschläge der Heckklappe versehen werden muß.

Aus der DE-A-16 55 650 ist ein doppelwandiges Karosseriebauteil aus Kunststoff für Kraftfahrzeuge bekannt, das aus einem Kunststoff im Reaktionsspritzgußverfahren hergestellt wird und das ein Außenteil und ein Innenteil aufweist, die über sich berührende äußere und innere Randbereiche aus jeweils ebenen Befestigungsbereichen und sich etwa senkrecht hierzu erstreckenden, benachbarten Stegbereichen bestehen, mittels eines Klebeauftrages verbunden werden.

Bei diesen bekannten doppelwandigen Karosseriebauteilen ist jedoch die Verbindung eines solchen Karosseriebauteiles im Bereich von Scheibenöffnungen nicht erläutert. Dementsprechend sind auch keine Maßnahmen aufgezeigt, mit denen der Klebeauftrag in günstiger Weise örtlich festgelegt wird und ein störendes Hervorquellen im Sichtbereich von Glasscheiben vermieden werden kann.

Fortsetzung der Beschreibung vom 15. September 1987, Seite 2, Absatz 2, fortfolgend.

Aus der DE-C- 32 36 166 und der DE-A- 32 45 710 sind Heckklappen-Bauteile aus Kunststoff mit einem Innenteil mit kanalförmigem Querschnitt bekannt, wobei das Innenteil durch Verkleben mit einem Außenteil, das im wesentlichen von einer entsprechenden Glasscheibe gebildet wird, zu einem doppelwandigen Karosseriebauteil ergänzt wird.

Bei diesen bekannten Heckklappen-Bauteilen schränkt das als Glasscheibe ausgebildete Außenteil die stilistischen Gestaltungsmöglichkeiten der Heckklappe in erheblichem Maße ein.

Die Aufgabe der Erfindung ist es, ein doppelwandiges Karosseriebauteil aus Kunststoff für Kraftfahrzeuge, insbesondere ein Tür- oder Heckklappen-Bauteil der im Oberbegriff des Patentanspruches 1 erläuterten Art derart zu verbessern, daß die beiden aus thermoplastischem Kunststoffmaterial gespritzten Teile, das Außenteil und das Innenteil mit einfachen Klebe- oder Klebeschweißverfahren miteinander verbunden werden können und einen doppelwandigen Karosseriebauteil von solcher Steifigkeit bilden, daß auf die Anordnung von metallischen Verstärkungen weitgehend verzichtet werden kann.

Gemäß der Erfindung wird diese Aufgabe gelöst, indem ein doppelwandiges Karosseriebauteil aus Kunststoff für Kraftfahrzeuge, insbesondere ein Tür- oder Heckklappen-Bauteil der im Oberbegriff des Patentanspruches 1 erläuterten Art die im Kennzeichenteil des Patentanspruches 1 aufgezeigten Merkmale aufweist.

In den Ansprüchen 2 bis 9 sind weitere zweckmäßige Einzelheiten der Erfindung aufgezeigt.

Dadurch, daß die sich berührenden Randbereiche des Aussenteiles und des Innenteiles jeweils aus einem ebenen Verbindungsbereich mit einem benachbarten Stegbereich bestehen, wird jeweils ein weit offener Kanalquerschnitt zur Einbringung des Kleberauftrages gebildet, der ein einwandfreies Ausrichten von Außenteil zu Innenteil zuläßt, ein Austreten von überschüssigem Kleber in den nicht sichtbaren Randbereichen ermöglicht und nach dem Aushärten der Klebeverbindung kann diese nicht nur in Richtung der Ebene der beiden Bauteile sondern auch in senkrechter Richtung hierzu auf Scherung beansprucht werden.

Dadurch, daß die ebenen Randbereiche am Außenteil im Bereich von Scheibenanordnungen durch am Umfang der Scheibenöffnung umlaufende Absenkungen und die ebenen Randbereiche am Innenteil abgesenkt und von einem Randsteg umfaßt sind, wird die Klebeverbindung der Glasscheibe abgesenkt und die Glasscheibe liegt außenbündig zur Karosserieoberfläche und der Randsteg bildet eine Anschlagkante für die Glasscheibe und eine innere Sichtabdeckung für die Klebeverbindung.

Dadurch, daß im Bereich einer Schloßanordnung am Bauteil das Innenteil trichterförmig in Richtung auf den eine Schließzylinderaufnahme aufweisenden Außenteil geformt ist und einen sich konzentrisch zur Schließzylinderaufnahme erstreckenden Hülsenansatz aufweist, der mit der Schließzylinderaufnahme Außenteil und Innenteil zentrierend verrastet und/oder verklebt oder verschweißt ist und am Innenteil zur Außenteil-Innenfläche parallel liegende, umlaufende Flächenbereiche vorgesehen sind, die durch eventuellen Kleberauftrag zusätzlich mit dem Außenteil verbunden sind, werden höher beanspruchte Teilbereiche des Karosseriebauteiles in zweckmäßiger Weise verstärkt, so daß zusätzliche Blechverstärkungen entfallen können.

Dadurch, daß im Bereich einer Scheibenwischermotor-Anordnung am Bauteil das Innenteil in konzentrischen Bereichen trichterförmig in Richtung auf den eine Wischerwellenaufnahme aufweisenden Außenteil geformt ist und mit zur Aussenteil-Innenfläche parallel liegenden, umlaufenden Flächenbereichen versehen ist, über die er durch Kleber mit dem Außenteil verbunden ist, kann auch dieser hoch beanspruchte Bereich des Karosseriebauteiles so sicher verstärkt werden, daß auf Blechhalter für den Scheibenwischermotor verzichtet werden kann.

Dadurch, daß am Innenteil ein nach außen vorstehendes, aus einer Vielzahl von Steglaschen gebildetes Scharnierteil ausgebildet ist, das über im kanalförmigen Bereich des Innenteiles verlaufende Versteifungsstege abgestützt ist, kann auch für die erforderliche Scharnieranordnung auf die Anbringung metallischer Beschlagteile einschließlich Schrauben, Muttern und dergl. verzichtet werden.

Dadurch, daß am Innenteil in dessen kanalförmigen Bereich eine Vielzahl von Stützstegen senkrecht zu einer Innenwand ausgebildet sind, parallel zu der sich die Verankerung eines Abstützbeschlages für eine Gasfederanordnung der Heckklappe erstreckt, kann auch hier ohne metallische Verstärkung die erforderliche Kraftaufnahme sichergestellt werden.

Die Erfindung wird anhand eines in den Zeichnungen gezeigten Ausführungsbeispieles näher erläutert. Es zeigt:

Fig. 1    eine Schrägrißansicht einer Heckklappe gemäß der Erfindung mit der Angabe der Schnitte, die für die Erläuterung der unterschiedlichen Verbindungsbereiche erforderlich sind;

Fig. 2    einen Schnitt entlang der Linie II-II in Fig. 1;

Fig. 3    einen Schnitt entlang der Linie III-III in Fig. 1;

Fig. 4    einen Schnitt entlang der Linie IV-IV in Fig. 1;

Fig. 5    einen Schnitt entlang der Linie V-V in Fig. 1;

Fig. 6    einen Schnitt entlang der Linie VI-VI in Fig. 1;

Fig. 7    eine Ansicht in Richtung des Pfeiles VII in Fig. 6 und

Fig. 8    einen Schnitt entlang der Linie VIII-VIII in Fig. 1.

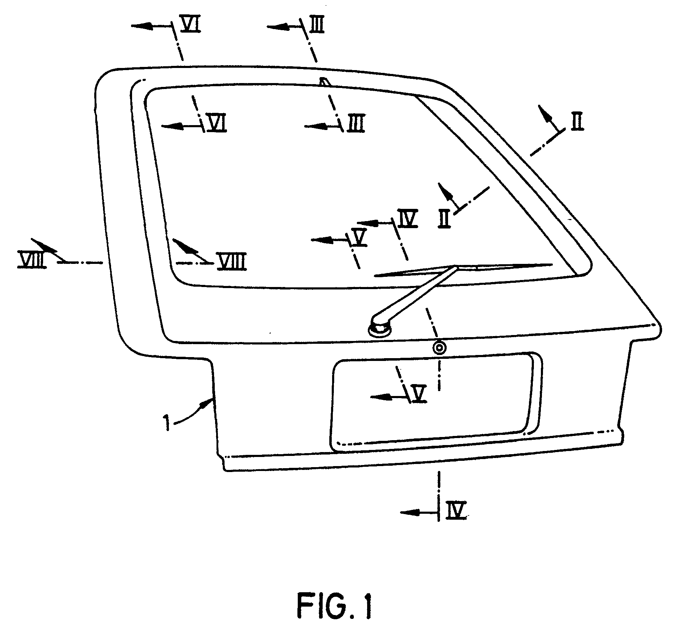

Die in Figur 1 gezeigte Heckklappe 1 eines Kraftfahrzeuges besteht im wesentlichen aus einem aus thermoplastischem Kunststoffmaterial gespritzten Außenteil 2 und einem ebenso hergestellten Innenteil 3. Das Außenteil 2 weist eine im wesentlichen glattflächige Formgebung auf, wie sie für die Außenkontur eines Karosseriebauteiles gewünscht wird, während das Innenteil umlaufend einen kanalförmigen Querschnitt von unterschiedlichen Abmessungen aufweist.

Die beiden Bauteile, das Außenteil 2 und das Innenteil 3 sind miteinander über an ihren Außenumfängen verlaufende äußere Randbereiche 4 und entlang ihrer inneren Umfänge verlaufenden inneren Randbereiche die aneinanderliegen, miteinander durch einen Kleberauftrag 6 oder durch Klebeschweißen verbunden.

Die äußeren und inneren Randbereiche 4 und 5 der beiden Bauteile, Außenteil 2 und Innenteil 3, weisen jeweils einen ebenen Verbindungsbereich 7 bzw. 8 und 9 bzw. 10 auf benachbart denen an einem der Bauteile ein Stegbereich 11 bzw. 12 vorgesehen ist.

Durch die ebenen Verbindungsbereiche 7 bzw. 10 in Verbindung mit den Stegbereichen 11 bzw. 12 werden weite Aufnahmeräume für den Kleberauftrag 6 geschaffen aber dennoch soviel Freiheit zwischen den Bauteilen aufrechterhalten, daß eine einwandfreie Ausrichtung von Außenteil 2 und Innenteil 3 zueinander möglich ist.

Darüber hinaus kann durch die Weite der Verbindungsbereiche sichergestellt werden, daß z.B. für die Anwendung einer Reibungs-Klebeschweißverbindung die erforderliche Oszillation der Randbereiche der beiden Bauteile möglich ist. Ebenso ist die Anwendung von Ultraschall-Klebeschweißverbindungen möglich.

Die inneren Randbereiche 5 am Außenteil 2 und am Innenteil 3 sind zur Aufnahme einer Scheibenanordnung 13 vorgesehen und der Außenteil 2 ist hierfür mit einer am Umfang der Scheibenöffnung umlaufenden Absenkung 14 nach innen versehen und das Innenteil 3 ist mit einem am Umfang der Scheibenöffnung umlaufenden, den abgesenkten Randbereich 10 umfassenden Randsteg 15 nach außen versehen.

Dadurch ergibt sich ein abgesenkter Raum zur Anbringung des Klebers 16 für die Glasscheibe 13,wodurch die Glasscheibe 13 außenbündig zur Karosserieoberfläche liegt, wobei der Randsteg 15 sowohl eine Anschlagkante für die Glasscheibe 13 als auch eine innere Sichtabdeckung für die Klebeverbindung 16 bildet.

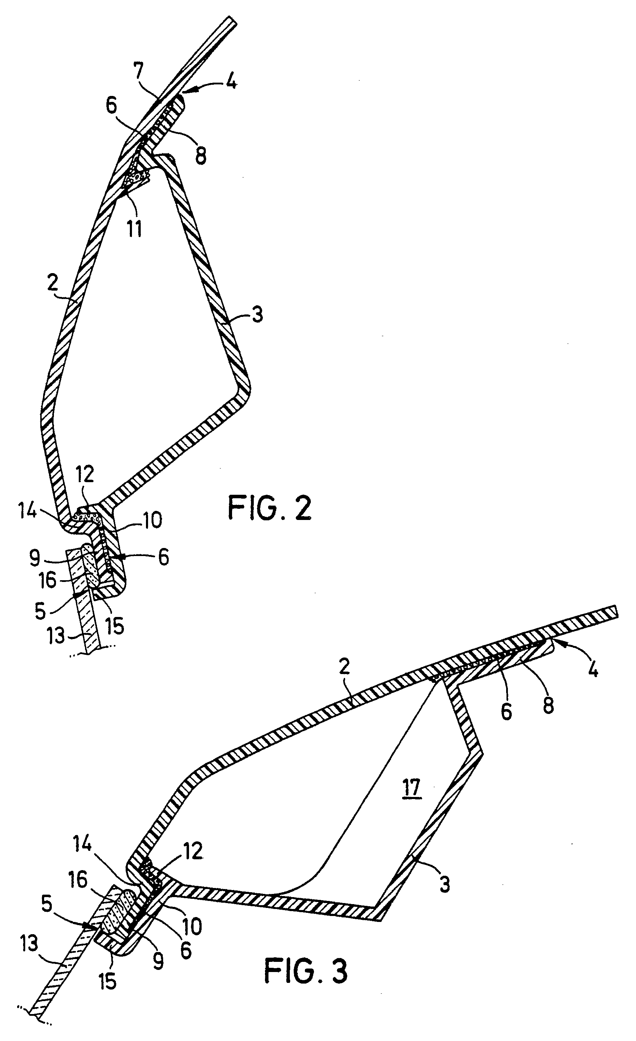

Aus Figur 3 ist nochmals die Scheibenanordnung im Bereich der Verbindung der inneren Randbereiche zwischen dem Aussenteil 2 und dem Innenteil 3 zu ersehen, wobei im kanalförmigen Querschnitt des Innenteiles 3 sich senkrecht hierzu erstreckende Verstärkungsrippen 17 gezeigt sind.

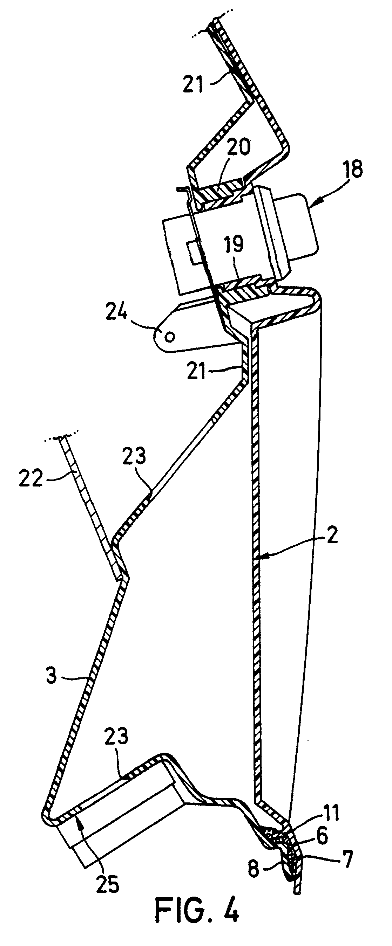

Aus Figur 4 ist der Bereich einer Schloßanordnung 18 zu ersehen. Das Außenteil 2 ist hierbei mit einer Schließzylinderaufnahme 19 versehen, während das Innenteil 3 trichterförmig in Richtung auf das Außenteil 2 geformt ist und einen sich konzentrisch zur Schließzylinderaufnahme 19 erstreckenden Hülsenansatz 20 aufweist, der mit der Schließzylinderaufnahme 19 das Außenteil 2 und das Innenteil 3 zueinander zentrierend verrastet und/oder verklebt oder verschweißt ist und am Innenteil 3 zur Aussenteil-Innenfläche parellelliegende Flächenbereiche 21 vorgesehen sind, mittels denen das Innenteil 3 mit dem Außenteil 2 durch einen eventuellen Kleberauftrag oder durch KLebeschweißen zusätzlich verbunden sein kann. Die trichterförmige Einstülpung des Innenteiles 3 kann hierbei zum Fahrzeuginnern hin mittels einer Verkleidungspappe 22 abgedeckt werden.

Selbstverständlich können am Innenteil 3 Zugangsöffnungen 23 für die Verlegung von Betätigungsgestängen sowie Konsolen 24 und Aufnahmen 25 für die für die Betätigungs-und Verriegelungseinrichtungen vorgesehen werden.

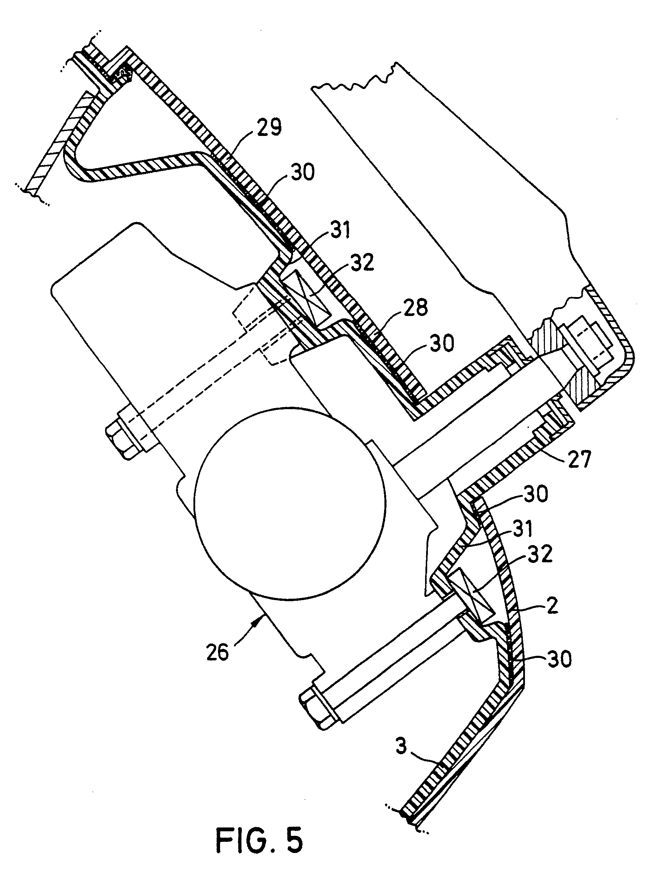

Aus Figur 5 ist die Ausbildung des Außenteiles 2 in Verbindung mit dem Innenteil 3 in dem Bereich einer Scheibenwischermotor-Anordnung 26 gezeigt. Das Außenteil 2 ist hierbei mit einer Wischerwellenaufnahme 27 versehen und das Innenteil 3 ist wieder trichterförmig in Richtung auf das Außenteil 2 hin verformt und zwar derart, daß es in zwei etwa konzentrischen Bereichen 29 und 30 parallel zur Außenteil-Innenfläche liegt und durch Kleberauftrag 30 oder durch Klebeschweißen mit dem Außenteil 2 verbunden wird. Zwischen den im wesentlichen konzentrischen Bereichen 28 und 29 können in zweckmäßiger Weise Aufnahmen 31 für Befestigungsschrauben 32 der Scheibenwischermotor-Anordnung 26 vorgesehen werden. Durch die unmittelbare Befestigung des Scheibenwischermotors 26 am Innenteil 3 können bisher erforderliche Geräuschisolierungen entfallen.

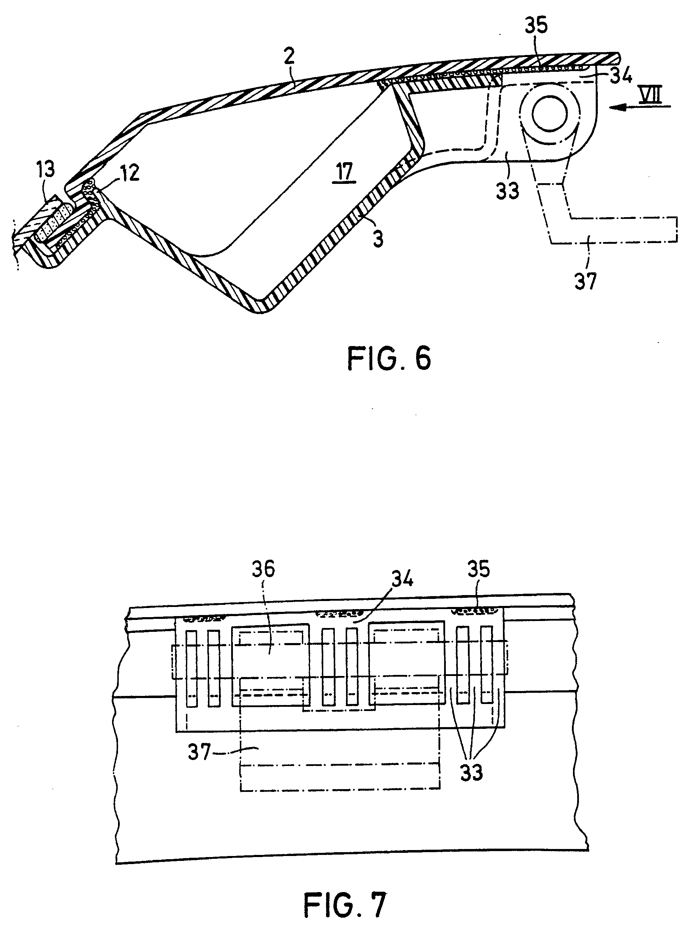

Aus den Figuren 6 und 7 ist die Ausbildung der Scharnieranordnung der Heckklappe zu ersehen. Das Innenteil 3 ist hierzu mit einer Vielzahl von Steglaschen 33 versehen, die jeweils an einer Basis 34 miteinander verbunden sind und über einen Kleberauftrag 35 oder eine Klebeschweißverbindung mit dem Außenteil 2 verbunden sind. Diese Steglaschen 33 können über einen normalen Scharnierbolzen 36 mit einem herkömmlichen Scharnierbeschlag 37 verbunden werden, der in herkömmlicher Weise an der Karosserie des Kraftfahrzeuges befestigt werden kann.

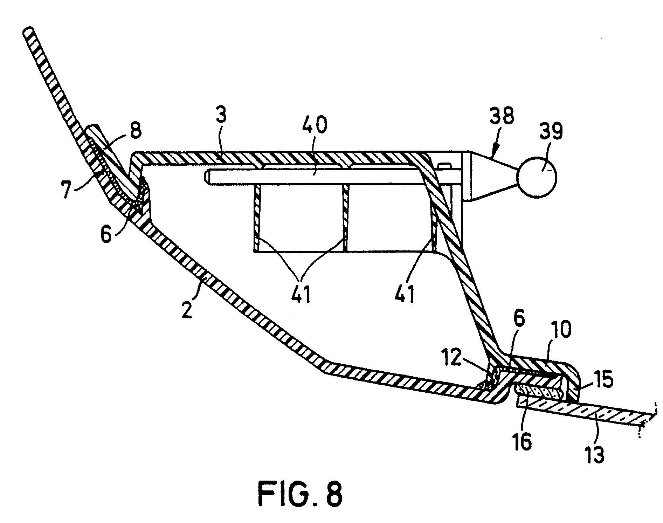

Aus Figur 8 ist die Befestigung eines Abstützbeschlages 38 für eine Gasfeder für die Heckklappe des Kraftfahrzeuges zu ersehen. Der Abstützbeschlag 38 besteht im wesentlichen aus einem Kugelkopf 39 und einem Dorn- oder Bolzenansatz 40, dessen Oberfläche gerändelt, gezahnt mit Gewinde versehen, oder sonstwie aufgerauht sein kann und der durch Heißeinsenken oder einschrauben an sich senkrecht zur Innenwand des Innenteiles 3 erstreckenden Stützstegen 41 befestigt wird.

Durch die zuletzt erwähnten Maßnahmen zur Befestigung von Scharnier- und Abstützbeschlägen, deren Einzelheiten dem Fachmann bei Kunststoffkonstruktionen an sich bekannt sind, wird bei der erfindungsgemäßen Auslegung der Heckklappe eine möglichst minimale Anordnung von metallischen Verstärkungsbauteilen sichergestellt.

Die aus Figur 4 ersichtliche Verbindung zwischen dem Aussenteil 2 und dem Innenteil 3 über die miteinander verrasteten Hülsenabschnitte, der Schließzylinderaufnahme 19 und dem Hülsenansatz 20 bilden eine sichere Abstützung des Schloßzylinders gegen einen Aufbruchversuch durch Hineinstoßen des Schloßzylinders.

Weiterhin kann benachbart dem Hülsenansatz 20 eine Konsole 24 zur Lagerung eines Betätigungsgestänges am Innenteil 3 mitangeformt werden.

## Ansprüche

1. Doppelwandiges Karosseriebauteil aus Kunststoff für Kraftfahrzeuge, insbesondere Tür- oder Heckklappen-Bauteil, aus einem aus thermoplastischen Kunststoffmaterial gespritzten Außenteil und einem ebensolchen Innenteil, die entlang einander berührender Randbereiche miteinander verbunden sind, wobei die sich berührenden äußeren und inneren Randbereiche aus jeweils ebenen Befestigungsbereichen und sich etwa senkrecht hierzu erstrekkenden benachbarten Stegbereichen bestehen, an denen der Kleberauftrag bzw. an denen die Klebeschweißverbindung erfolgt,
   **dadurch gekennzeichnet, daß**
   - die ebenen Randbereiche (9) am Außenteil (2) durch im Bereich von Scheibenanordnungen (13) am Umfang der Scheibenöffnung umlaufende Absenkungen (14) und
   - die ebenen Randbereiche (10) am Innenteil (3) durch im Bereich von Scheibenanordnungen (13) am Umfang der Scheibenöffnung umlaufende Absenkungen mit durch sich etwa senkrecht hierzu erstreckenden, inneren und äußeren Randstegen (12 bzw. 15) gebildet sind, wodurch

- die Klebeverbindung (16) der Glasscheibe (13) abgesenkt liegt und die Glasscheibe (13) außenbündig zur Karosserieoberfläche liegt und

- die Randstege (12 und 15) einen Aufnahmeraum für den Klebeauftrag (6) bilden und

- der Randsteg (15) einen Anschlag für die Glasscheibe (13) und eine innere Sichtabdeckung für die Klebeverbindung (16) bildet.

2. Karosseriebauteil nach Anspruch 1, **dadurch gekennzeichnet**, daß im Bereich einer Schloßanordnung (18) am Bauteil (1) das Innenteil (3) trichterförmig in Richtung auf das eine Schließzylinderaufnahme (19) aufweisende Außenteil (2) geformt ist und einen sich konzentrisch zur Schließzylinderaufnahme (19) erstreckenden Hülsenansatz (20) aufweist, der mit der Schließzylinderaufnahme (19) Außenteil (2) und Innenteil (3) zentrierend verrastet und/oder verklebt oder verschweißt ist und am Innenteil (3) zur Außenteil-Innenfläche parallel liegende Flächenbereiche (21) vorgesehen sind, die durch eventuellen Kleberauftrag oder durch Klebeschweißen zusätzlich mit dem Außenteil (2) verbunden sind.

3. Karosseriebauteil nach Anspruch 2, **dadurch gekennzeichnet**, daß im Bereich einer Scheibenwischermotor-Anordnung (26) am Bauteil (1) das Innenteil (3) trichterförmig in Richtung auf den eine Wischerwellenaufnahme (27) aufweisenden Außenteil (2) geformt ist und zur Außenteil-Innenfläche parallelliegende etwa konzentrische Flächenbereiche (28 und 29) bildet, die durch Kleberauftrag (30) oder durch Klebeschweißen mit dem Außenteil (2) verbunden sind.

4. Karosseriebauteile nach den Ansprüchen 1 bis 3, **dadurch gekennzeichnet**, daß am Innenteil (3) ein Scharnierteil durch eine Vielzahl von nach außen vorstehenden Steglaschen (33) gebildet ist, wobei die Steglaschen (33) jeweils an einer Basis (34) zusammengefaßt und über einen Kleberauftrag (35) oder durch Klebeschweißen mit dem Außenteil (2) verbunden sind und wobei die Steglaschen (33) am Innenteil (3) über sich quer zum kanalförmigen Bereich des Innenteiles (3) verlaufende Versteifungsstege (17) abgestützt sind.

5. Karosseriebauteil nach den Ansprüchen 1 bis 3, **dadurch gekennzeichnet**, daß am Innenteil (3) in dessen kanalförmigen Bereich eine Vielzahl von Stützstegen (41) sich senkrecht zu einer Seitenwand erstreckend ausgebildet sind und darin ein Abstützbeschlag (38) mit seinem Bolzenteil (40) verankert ist, dessen Kugelkopf (39) für die Abstützung einer Gasfeder für die Heckklappe vorgesehen ist.

6. Karosseriebauteil nach den Ansprüchen 1 bis 5, **dadurch gekennzeichnet**, daß vorzugsweise an Krafteinleitungspunkten aber auch im Bereich gekrümmter Hohlquerschnitte dicht beieinanderliegende in Gruppen zusammengefaßte Stege angebracht sind, die mit dem Außenteil (2) verklebt bzw. verschweißt werden.

7. Karosseriebauteil nach den Ansprüchen 1 bis 5, **dadurch gekennzeichnet**, daß der Hohlraum zwischen Innen- und Außenteil (3 und 2) ganz oder teilweise ausgeschäumt ist.

8. Karosseriebauteil nach den Ansprüchen 1 bis 3, **dadurch gekennzeichnet**, daß das Aussenteil (2) einen eingeformten Handgriff aufweist.

**Claims**

1. A double-walled bodywork component of plastics material for motor vehicles, in particular a door or tailgate component, [comprising] an outer part injection-moulded from a thermoplastic synthetic material and an inner part of the same material which are joined together along mutually touching edge areas, the mutually touching outer areas and inner edge areas comprising flat fastening areas in each case and adjacent web areas which extend approximately at right angles thereto and on which the adhesive coating or the adhesion welding join is applied, characterized in that

- the flat edge areas (9) on the outer part (2) are formed by depressions (14) extending around the periphery of the window opening in the region of window devices (13) and

- the flat edge areas (10) on the inner part (3) are formed by depressions extending around the periphery of the window opening in the region of window devices (13) and by inner and outer edge webs (12 and 15 respectively) extending approximately at right angles thereto, as a result of which
- the adhesive join (16) of the glass pane (13) lies sunk and the glass pane (13) lies externally flush with the surface of the bodywork, and
- the edge webs (12 and 15) form a receiving space for the adhesive coating and
- the edge web (15) forms a stop for the glass pane (13) and an inner visual covering for the adhesive join (16).

2. A bodywork component according to Claim 1, characterized in that in the region of a lock arrangement (18) on the component (1) the internal part (3) is formed in the manner of a funnel in the direction towards the outer part (2) comprising a lock cylinder receiving means (19) and comprises a sleeve attachment (20) which extends concentrically to the lock cylinder receiving means (19) and which with the lock cylinder receiving means (19) engages the outer part (2) and the inner part (3) in a centring manner and/or is glued or welded thereto, and surface areas (21), which lie parallel to the inner surface of the outer part (2) and which are additionally joined to the outer part (2) by the possible application of adhesive or by adhesive welding, are provided on the inner part (3).

3. A bodywork component according to Claim 2, characterized in that in the region of a windscreen wiper motor device (26) on the component (1) the inner part (3) is formed in the manner of a funnel in the direction towards the outer part (2) comprising a wiper shaft receiving means (27) and forms approximately concentric surface areas (28 and 29) which lie parallel to the inner surface of the outer part (2) and which are joined by an adhesive coating (30) or by adhesion welding to the outer part (2).

4. Bodywork components according to Claims 1 to 3, characterized in that on the inner part (3) a hinge part is formed by a plurality of outwardly projecting bracket clips (33), the bracket clips (33) being combined on a base (34) in each case and joined to the outer part (2) by way of an adhesive coating (35) or by adhesion welding, and the bracket clips (33) on the inner part (3) being supported by way of reinforcement webs (17) which extend transversely to the channel-shaped region of the inner part (3).

5. A bodywork component according to Claims 1 to 3, characterized in that on the inner part (3) a plurality of support webs (41) are formed extending at right angles to a lateral wall in the channel-shaped region of the said inner part (3) and a support fitting (38) is anchored therein with its pin portion (40), the ball end (39) of which is provided for supporting a pneumatic spring for the tailgate.

6. A bodywork component according to Claims 1 to 5, characterized in that closely adjacent webs which are combined into groups and which are glued or welded to the outer part (2) are attached preferably at force application points and also in the region of curved hollow cross-sections.

7. A bodywork component according to Claims 1 to 5, characterized in that the cavity between the inner and the outer parts (3 and 2) is completely or partially filled with foam.

8. A bodywork component according to Claims 1 to 3, characterized in that the outer part (2) has an integrally formed handle.

## Revendications

1. Elément constitutif de carrosserie à double paroi en matière plastique pour véhicules automobiles, en particulier élément constitutif de portière ou de hayon, composé d'une partie extérieure moulée par injection en une matière synthétique thermoplastique et une partie intérieure analogue qui sont reliées entre elles le long de zones de bord en contact entre elles, les zones de bord intérieures et extérieures en contact se composant à chaque fois de zones de fixation planes et de zones à nervures voisines qui s'étendent à peu près perpendiculairement à celles-ci, et l'application de colle ou, respectivement, la liaison par soudage par collage ayant lieu sur elles, caractérisé par le fait que les zones de bord planes (9) ménagées sur la partie extérieure (2) sont constituées par des creusements (14) entourant le pourtour de l'ouverture destinée à la vitre dans la région où est disposée la vitre (13), et que les zones de bord planes (10) ménagées sur la partie intérieure (3) sont constituées par des creusements entourant le pour-tour de l'ouverture destinée à la vitre dans la région où est disposée la vitre (13) et comprenant des nervures de bord intérieures et extérieures (12 et 15, respectivement) qui s'étendent à peu près perpendiculairement à ceux-ci, grâce à quoi la liaison par collage (16) de la vitre (13) est dans un enfoncement et la vitre (13) est extérieurement de niveau avec la surface de la carrosserie, les nervures de bord (12 et 15) forment un réceptacle pour la colle appliquée (6) et la nervure de bord (15) forme une butée pour la vitre (13) et un cache intérieur pour la liaison par collage (16).

2. Elément constitutif de carrosserie selon la revendication 1, caractérisé par le fait que, dans la région où une serrure (18) est disposée sur l'élément constitutif (1), la partie intérieure (3) est conformée en entonnoir dans la direction de la partie extérieure (2) qui comporte un logement (19) destiné au barillet de la serrure, et qu'elle comporte un prolongement (20) en forme de manchon qui s'étend concentriquement par rapport au logement (19) destiné au barillet de la serrure et qui est encliqueté et/ou collé ou soudé sur le logement (19) destiné au barillet de la serrure en centrant la partie extérieure (2) et la partie intérieure (3), et qu'il est prévu sur la partie intérieure (3) des zones de surface (21) qui sont situées parallèlement à la surface intérieure de la partie extérieure et qui sont reliées en supplément à la partie extérieure (2) par une application éventuelle de colle ou par un soudage par collage.

3. Elément constitutif de carrosserie selon la revendication 2, caractérisé par le fait que, dans la région où un moteur d'essuie-glace (26) est disposé sur l'élément constitutif (1), la partie intérieure (3) est conformée en entonnoir dans la direction de la partie extérieure (2) qui comporte un logement (27) destiné à l'arbre de l'essuieglace, et qu'elle constitue des zones de surface (28 et 29) à peu près concentriques qui sont situées parallèlement à la surface intérieure de la partie extérieure et qui sont reliées à la partie extérieure (2) grâce à une application de colle (30) ou à un soudage par collage.

4. Elément constitutif de carrosserie selon les revendications 1 à 3, caractérisé par le fait qu'une partie de charnière est formée sur la partie intérieure (3) par une pluralité de jumelles (33) en saillie vers l'extérieur, les jumelles (33) étant toutes assemblées sur une base (34) et reliées à la partie intérieure (3) par l'intermédiaire d'une application de colle (35) ou d'un soudage par collage, et les jumelles (33) étant appuyées sur la partie intérieure (3) par l'intermédiaire de nervures de raidissement (17) qui s'étendent transversalement par rapport à la région en forme de canal de la partie intérieure (3).

5. Elément constitutif de carrosserie selon les revendications 1 à 3, caractérisé par le fait qu'une pluralité de nervures d'appui (41) est formée sur la partie intérieure (3), dans sa région en forme de canal, en s'étendant perpendiculairement à une paroi latérale, et qu'une ferrure d'appui (38) y est ancrée par sa partie (40) en forme de goujon, sa tête sphérique (39) étant prévue pour l'appui d'un ressort pneumatique destiné au hayon.

6. Elément constitutif de carrosserie selon les revendications 1 à 5, caractérisé par le fait que des nervures assemblées en groupe et proches les unes des autres sont placées de préférence aux points d'application des forces, mais aussi dans la région des sections transversales creuses courbées, et sont collées ou, respectivement, soudées à la partie extérieure (2).

7. Elément constitutif de carrosserie selon les revendications 1 à 5, caractérisé par le fait que la cavité ménagée entre les parties intérieure et extérieure (3 et 2) est partiellement ou complètement remplie de mousse.

8. Elément constitutif de carrosserie selon les revendications 1 à 3, caractérisé par le fait que la partie extérieure (2) comporte une poignée moulée.

# FIG. 1

FIG. 2

FIG. 3

FIG. 4

FIG. 5

FIG. 6

FIG. 7

FIG. 8